# EUROPEAN PATENT APPLICATION

(11) **EP 1 418 091 A1**
(43) Date of publication of application: **12.05.2004**
(21) Application number: 02380234.1
(22) Date of filing: 11.11.2002
(51) Int. Cl.: B60R 13/02, B60H 1/22, B60H 1/00

(54) **Covering with heat radiating system for inside covering of the cabin of a vehicle**

(30) Priority: 05.11.2002 ES 200202535
(71) Applicant: Grupo Antolin Ingenieria, S.A., E-09007 Burgos (ES)
(72) Inventor: Soto Romero, Dario, 47007 Valladolid (ES); Castillo Garcia, Marta, 09006 Burgos (ES)
(74) Representative: Ungria Lopez, Javier

(57) **Abstract**

It has special application in the manufacture of roof coverings with decorative, protective, insulating, safety functions, etc., proper to these elements of the cabin of a vehicle, to which is incorporated an additional function of heat emission by radiation.

The covering permits a heating function to be carried out on the cabin or on the occupants, using a source of electrical energy, being incorporated into the multi-layer structure of the covering, involving the underlayer for the covering (5), a decorative covering (6) and the radiating unit or units, preferably arranged on a lamina which acts as support (3).

## Description

### OBJECT OF THE INVENTION

As stated in the title of this descriptive report, the present invention refers to a covering with a heat radiating system for the inside covering of the cabin of a vehicle, and contributes notable relevant and advantageous characteristics to present heating systems used in vehicles.

In the manufacture of roof coverings, basically with the familiar habitual functions of insulation, safety, protection and decoration that are proper to these elements of the cabin of a vehicle, an additional function of heat emission by radiation is included in accordance with the invention.

It is therefore an object of the invention to obtain a covering permitting the carrying out of a heating function of the cabin or of the occupants, using a source of electrical energy without this implying any loss of the remaining functions nor of the characteristics normally associated with this type of covering, nor any appreciable degradation with use.

### BACKGROUND OF THE INVENTION

At present, heating systems are used which run along the roof covering of a vehicle, being formed from ducts which run along the unexposed face, through which hot air is sent to the inside of the cabin via certain outlet openings. This heat transmission is done by convection, taking advantage of the heating of the outside air as it passes around the vehicle engine or other means of heating.

This is the case with Invention Patents with publication numbers WO 84/00520, US 5921619 and US 5090301.

Systems based on hot air are influenced by the heat that can be generated in the vehicle, therefore, if the heat given off by it is not sufficient or cannot be generated with the necessary speed, the system fails to meet certain requirements that are demanded, such as the supplied calorific power and/or speed of heating. At present, vehicle engines are increasing their efficiency and smaller engines are being constructed, which means that the heat generated is becoming increasingly less.

An important problem is the effect that this air that is heated in the engine produces on the sensation of comfort of the occupants, since it is air that has odours and which can even cause a feeling of nausea among the occupants.

These air systems also produce noises, both as a consequence of the air being displaced along the ducts and of the fan used for displacing it at a greater speed or when it passes through the air outlet grilles.

In some vehicles in which greater inside space is currently sought, with hot air systems based on the transport of this air via ducts, a lot of space is required, thus compelling the free space inside the cabin to be reduced or limiting the use of these systems to certain types of vehicle. This space between the covering and the external metal sheet of the roof is normally small and also has to house other devices.

In particular, this type of duct and its accessories limit and hinder the use of head or curtain airbag devices incorporated into the roof, affecting the necessary free space both for their location and for ensuring the correct inflation of them when necessary.

Another drawback of the hot air system is the weight that is added to a traditional covering owing to the ducts, grilles, adhesive, which has a negative influence on the self-supporting capacity of the covering, increasing the risk of damage and making it more difficult to handle when being fitted, in addition to its effect on the total weight of the vehicle.

The fitting of devices based on hot air is made more complex and laborious by having to fit additional components, grilles and ducts, and it also increases the cost of the covering.

From the aesthetic point of view, in addition to the fact already mentioned that the shape of the inside of the cabin has to be adapted in order to create make sufficient space for housing these systems, the air outlets also break the continuity of the aesthetic of the covering and limit its design possibilities.

This also affects the final geometry that has to be given to the actual roof covering, compelling the use of complex shapes such as pronounced depressions, which are difficult to achieve with the usual manufacturing technologies.

Other antecedents are also known as electrical heating devices for motor vehicle seats, such as that considered in EP 0582734 which describes that at least part of the filling for the seat and back is directly formed from an electrically conducting elastomeric material whose electrical resistance varies depending on the pressure exerted on it.

Embedded in this part of the filling are a pair of electrical terminals of opposite polarity arranged in such a way that the electric current that circulates from one terminal to the other is forced to traverse that part of the filling.

By means of EP 0302281, a procedure is known for manufacturing a vehicle seat with heating, heatable with electricity via its surface and/or a surface in the zone of the seat with a foldable layer. This layer for the seat of foamy material forms an independent part and it is used for the widest possible range of seat shapes. This layer consists of a foamy material with an encrusted electrical conductor and, once it has been stuck on the seat, it is covered with the desired cloth or upholstery.

Patent ES 2028150 considers a seat especially for a vehicle, with a connection plate for heating by means of an electrical resistance positioned on the inside face, covered with layers of upholstery and with the connection plate being secured to the upholstery by means of another joined or stuck sheet which has been attached to the inside surface of the seat or of the back. This connection plate is coated with plastic, and is arranged on the inside face of the upholstery or of the covering sheet that hides the electrothermal conductors, and separated from the plane of these latter, acting as a housing for the temperature regulator for securing the connection cable and for fastening the connections of the electrothermal conductors. The distance between the connection plate and the inside face of the upholstery or of the covering sheet is adjusted by means of an assembly block provided in a predetermined place, made out of a spongy material or other elastic materials, and joined to both parts.

With regard to all these cases, it is considered that the proposed solution is different and novel because none of them considers the way of incorporating a radiating system of a roof covering, and moreover doing so as part of the actual process of manufacturing the covering, both of which are facts that are not contained in any of the above patents nor in the state of the known art.

### DESCRIPTION OF THE INVENTION

In general terms, the covering with a heat radiating system for inside covering of the cabin of a vehicle, forming the object of the invention, includes within itself, underneath the decorative covering, one or several radiating heater sets combined within it, fed with an electric current.

This device entails notable advantages, among which we can list the following:
- Being an electrical system, it does not depend on having the engine running, nor on the efficiency of that engine.
- No odours are produced since air does not have to recirculate through ducts that are outside the cabin.
- As it does not need air circulation, it does not produce noises.
- The space required for introducing the radiating heater set or units is minimal, and its use is not limited to small vehicles and neither is the design or the final appearance of the covering affected.
- The increase in weight of the actual covering is minimal owing to the lightness of the materials employed and their small quantity. In turn, there is a saving in weight corresponding to the generation and conduction components for hot air that it replaces.
- The fitting of parts is simple, since it is included as yet another layer in the usual manufacturing process for the covering, with a lower cost than that required in traditional systems.
- The roof covering includes a radiating heating system formed of one or several radiating heater sets located above the positions of the vehicle occupants. Each heater set is formed of one or several radiating heater elements of little thickness running along its surface, connected to the electrical terminals or connectors supplying electric current to the heater system unit.

There exists a connector which permits connection to be made between the heater system and the general wiring for the vehicle.

Metallic heating wire can be used as heater elements, or various technologies can be used for this purpose such as electroconducting paints, conducting plastics and in general any other type of electrical resistance.

The roof covering is formed from an underlayer and a decorative covering. The underlayer is habitually, though not necessarily, determined by a sandwich with the following layers: a central layer of porous material, normally polyurethane foam, two layers of fibreglass arranged on the two sides of the central layers, a series of additional reinforcements if this is considered necessary and, finally, two layers of paper or board on each of the outside faces of the above sandwich. Variants of this invention can exist in which the underlayer for the covering includes natural fibres instead of fibreglass, or in which, instead of the above sandwich, use is made of a single blanket of polyethylene or of any other material susceptible to being thermoformed. The decorative covering can be of the type fabric (which may or may not include a layer of flexible foam), non-fabric or fabric non-fabric, though it has been confirmed that the best results are achieved with coverings which do not include a layer of flexible foam since the flow of heat is greater in that case. In whatever case, these technologies have in common the fact that the covering is obtained with its final shape by means of thermoforming in a press.

Each radiating heater set is incorporated in such a way that the heater elements are positioned between the decorative covering and the underlayer for the covering, and the connector is positioned in the unexposed face of the underlayer for the covering.

The manufacturing process for incorporating the radiating heating system into the roof covering is achieved by means of two press strokes. In the first press stroke, the different layers forming part of the underlayer for the covering are introduced inside that covering, the holes are shaped and made where the connectors will be passing through in a later stage, and a series of holes are made for referencing the underlayer with respect to the support elements sustaining it in the remaining forming stages. These holes can be in a zone that will be cut off and discarded later on or the actual holes of the covering can be utilised, such as those for the fitting of sun visors, grab-handles, etc.

After locating the underlayer of the covering shaped on a support cradle, there are two alternative ways for positioning the radiating heater sets: either by means of manual fitting or by means of automatic fitting.

If manual fitting is preferred, the position of the radiating heater sets is indicated by means of certain marks or by means of slight depressions, and if automatic fitting is wished, this is done by means of the reference holes of the underlayer. Once the radiating heater sets have been located, the connector is passed through a hole corresponding to the unexposed face of the underlayer for the covering, where it will remain positioned.

Finally, the underlayer for the covering is located in the covering press and the decorative covering is added, thereby obtaining the final product.

In order to facilitate an understanding of the characteristics of the invention, and forming an integral part of this descriptive report, a sheet of drawings is attached in whose figures the following has been represented by way of illustration only, and not to be regarded as limiting:

### BRIEF DESCRIPTION OF THE FIGURES

Figure 1.- Is a schematic view of a radiating heater set formed from various heating wires, for including in the covering with heat radiating system for the inside covering of the cabin of a vehicle, in accordance with the invention.
Figure 2.- Is a schematic cross-section of the roof covering with a radiating heater set incorporated.

### DESCRIPTION OF AN EMBODIMENT OF THE INVENTION

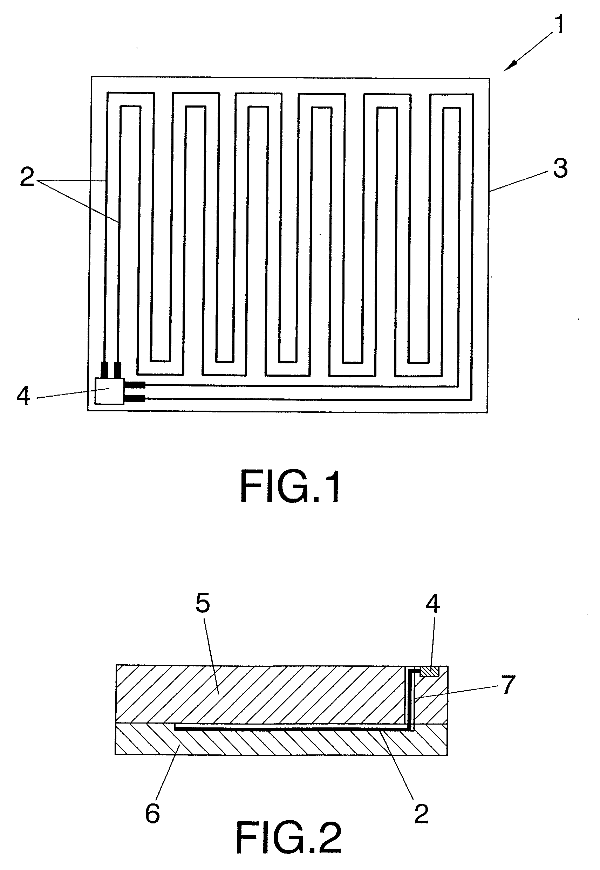

Making reference to the numbering adopted in the figures, we can see how the covering with heat radiating system for inside covering of the cabin of a vehicle, which the invention proposes, can include various radiating heater sets, one of which is shown in Figure 1 and is referenced in general with the number **(1)**. In the preferred embodiment, each heater set has a set of wires acting as electrical resistors running along its surface, and which have been referenced with the number **(2)**, and which in this particular case are also incorporated into a support sheet **(3)** for ease of handling.

The metallic heating wires **(2)** are connected to the connector **(4)**, to which the cable supplying electrical current from the vehicle's battery also reaches.

In Figure 2, where a cross-section of the roof covering can be observed, we can see that it is made up of the underlayer for the covering **(5)** and the decorative covering **(6)**, both shown schematically. Due to its nature, it can be made from various materials and layers, as we have stated earlier. Located between the decorative covering **(6)** and the underlayer for the covering **(5)** are the heating wires **(2)**, the connector **(4)** being embedded in the upper or unexposed face of the underlayer for the covering **(5)**. The underlayer for the covering **(5)** includes the holes **(7)** for the passage of the connectors **(4)**.

## Claims

1. **COVERING WITH HEAT RADIATING SYSTEM FOR INSIDE COVERING OF A CABIN OF A VEHICLE,** which, being of multilayer type and comprising an underlayer and a decorative covering with decorative, protective, insulating and safety functions proper to this application in vehicles, is **characterised in that** it comprises a heating function for the cabin of a vehicle, by means of incorporating within itself at least one radiating heater set **(1)** powered with electrical current.

2. **COVERING WITH HEAT RADIATING SYSTEM FOR INSIDE COVERING OF A CABIN OF A VEHICLE,** according to claim 1, **characterised in that** the heat radiating system comprises at least one radiating heater set **(1)** located at least above the positions of occupants of the vehicle, connected to a general wiring system of the vehicle by means of a corresponding electrical connector **(4).**

3. **COVERING WITH HEAT RADIATING SYSTEM FOR INSIDE COVERING OF A CABIN OF A VEHICLE,** according to claim 2, **characterised in that** radiating heater elements of a radiating heater set **(1)** comprise at least one metallic heater wire **(2)** running along its surface.

4. **COVERING WITH HEAT RADIATING SYSTEM FOR INSIDE COVERING OF A CABIN OF A VEHICLE,** according to claim 2, **characterised in that** the radiating elements of the radiating heater set **(1)**, comprise as radiating heater element, electroconductor paints, which coat at least part of its surface.

5. **COVERING WITH HEAT RADIATING SYSTEM FOR INSIDE COVERING OF A CABIN OF A VEHICLE,** according to claim 1, **characterised in that** at least one set of radiating heater elements **(2)** is integrated into a support sheet **(3)** of adequate dimensions and shapes.

6. **COVERING WITH HEAT RADIATING SYSTEM FOR INSIDE COVERING OF A CABIN OF A VEHICLE,** according to claim 1, **characterised in that** the underlayer material for the covering **(5)** is a sandwich with a central layer of porous material, two collateral reinforcing layers, and two outside layers of the covering underlayer made of paper or board.

7. **COVERING WITH HEAT RADIATING SYSTEM FOR INSIDE COVERING OF A CABIN OF A VEHICLE,** according to claims 1 and 6, **characterised in that** the underlayer material of the covering **(5)** comprises a central layer of polyurethane foam.

8. **COVERING WITH HEAT RADIATING SYSTEM FOR INSIDE COVERING OF A CABIN OF A VEHICLE,** according to claims 1 and 6, **characterised in that** the underlayer material of the covering **(5)** comprises at least one central layer of polyethylene.

9. **COVERING WITH HEAT RADIATING SYSTEM FOR INSIDE COVERING OF A CABIN OF A VEHICLE,** according to claims 1 and 6, **characterised in that** reinforcing layers are made of fibreglass.

10. **COVERING WITH HEAT RADIATING SYSTEM FOR INSIDE COVERING OF A CABIN OF A VEHICLE,** according to claim 1, **characterised in that** the reinforcing layers are made of natural fibres.

11. **COVERING WITH HEAT RADIATING SYSTEM FOR INSIDE COVERING OF A CABIN OF A VEHICLE,** according to claim 1, **characterised in that** a decorative covering **(6)** does not comprise a flexible layer for optimum heat evacuation.

12. **COVERING WITH HEAT RADIATING SYSTEM FOR INSIDE COVERING OF A CABIN OF A VEHICLE,** according to claim 1, **characterised in that** the radiating heater elements of a radiating heater set **(1)** are integrated between the decorative covering **(6)** and the underlayer of the covering **(5)**, while the connector **(4)** is located on the unexposed side of the underlayer of the covering **(5)**.

13. **COVERING WITH HEAT RADIATING SYSTEM FOR** **INSIDE COVERING OF A CABIN OF A VEHICLE,** according to claim 1, **characterised in that** the underlayer of the covering **(5)** comprises a series of holes **(7)** for the passage of the connectors **(4)** and a series of holes used for automatic fitting of the radiating heater sets **(1)** on a support cradle, the decorative covering **(6)** being subsequently located once the connectors **(4)** are passed to the unexposed side of the underlayer of the covering **(5)**.

14. **COVERING WITH HEAT RADIATING SYSTEM FOR INSIDE COVERING OF A CABIN OF A VEHICLE,** according to claim 1, **characterised in that** the underlayer of the covering **(5)**, the heat radiating sets (**1)** and the decorative covering **(6)**, determine the covering with heat radiating system of the roof of an automobile vehicle.
